Europäisches Patentamt

European Patent Office

Office européen des brevets

(19)

(11) **EP 0 623 802 B1**

(12) **EUROPÄISCHE PATENTSCHRIFT**

(45) Veröffentlichungstag und Bekanntmachung des Hinweises auf die Patenterteilung:
**20.05.1998 Patentblatt 1998/21**

(51) Int Cl.⁶: **G01B 9/02**

(21) Anmeldenummer: **94106730.8**

(22) Anmeldetag: **29.04.1994**

(54) **Absolutinterferometrisches Messverfahren mit einer Laserinterferometeranordnung**

Procedure for absolute measurements with a laser-interferometer

Procédé interférométrique pour des mesures absolues avec un interféromètre à laser

(84) Benannte Vertragsstaaten:
**AT CH DE FR GB IT LI**

(30) Priorität: **03.05.1993 DE 4314486**

(43) Veröffentlichungstag der Anmeldung:
**09.11.1994 Patentblatt 1994/45**

(73) Patentinhaber:
• **Dr. Johannes Heidenhain GmbH
83301 Traunreut (DE)**
• **FRAUNHOFER-GESELLSCHAFT ZUR
FÖRDERUNG DER
ANGEWANDTEN FORSCHUNG E.V.
80636 München (DE)**

(72) Erfinder:
• **Thiel, Jürgen, Dipl.-Phys.
D-52074 Aachen (DE)**
• **Michel, Dieter, Dipl.-Ing. (FH)
D-83278 Traunstein (DE)**
• **Franz, Andreas, Dr.
D-83308 Trostberg (DE)**

(56) Entgegenhaltungen:
WO-A-88/06711        DE-A- 3 528 259
US-A- 3 970 389

## Beschreibung

Die vorliegende Erfindung betrifft ein Verfahren zur absolut-interferometrischen Abstandsmessung.

Aus der DE-PS 36 08 075 ist eine Vorrichtung zur Messung des Abstands eines Gegenstandes unter Verwendung eines Laserstrahls bekannt, die sich aus einem Meßinterferometer und einem Referenzinterferometer zusammensetzt. Beide Interferometer werden mit dem Strahl desselben Lasers beaufschlagt. Durch Frequenzmodulation des Laserstrahls wird aus jeweils 2 miteinander interferierenden Teilstrahlen eine sogenannte Referenzschwebungswelle erzeugt, wobei die Anzahl von Wellen in der Meßschwebungswelle bzw. der Referenzschwebungswelle mittels einer Meßvorrichtung ermittelt und aus dem Verhältniswert zwischen der Anzahl dieser Wellen und dem bekannten Abstand der Referenzstrecke der Meßabstand bestimmt wird. Bei diesem Verfahren beginnt ein Meßgerät die Zahl der Wellen in der Referenzschwebungswelle im selben Zeitpunkt zu zählen, in dem es anfängt, auch die Zahl der Wellen in der Meßschwebungswelle zu zählen. Daher ist die Zahl der Wellen in der Referenzschwebungswelle im allgemeinen nicht ganzzahlig. Diesem Umstand wird dort dadurch Rechnung getragen, daß das Meßgerät so ausgebildet ist, daß die Zahl der Wellen in dem Referenzschwebungssignal mit einer Präzision bestimmt werden können, die genauer ist als der Dezimalpunkt.

Aus diesen Angaben geht insbesondere hervor, daß die Phase der Referenzschwebungswelle höchstens mit einer Auflösung von etwa 1/10 der Gesamtwellenlänge erfolgt. Diese Auflösung reicht jedoch bei weitem nicht an die mit anderen Methoden erreichbare Auflösung heran.

Weiter ist aus der DE-PS 34 04 963 ein Laserinterferometer bekannt, bei dem neben dem eigentlichen Meßinterferometer ein weiteres sogenanntes Regelinterferometer zur Regelung der Luftwellenlänge Verwendung findet. Dieses dient dazu, innerhalb der Meßstrecke des Meßinterferometers etwa auftretende Störungen der Luftwellenlänge bereits während einer Messung zu kompensieren.

Aus der US-PS 3,970,389 ist ein absolutinterferometrisches Meßverfahren bekannt, bei dem mittels eines durchstimmbaren Lasers zwischen zwei Grenzwellenlängen eine Interferometerwellenlänge definiert variiert wird. Die in diesem Durchstimmbereich auftretenden Phasenänderungen werden erfaßt und zur Auswertung in Verbindung mit den beiden bekannten Grenzwellenlängenwerten verwendet. Problematisch an der vorgeschlagenen Variante erweist sich jedoch, daß die beiden Grenzwellenlängen lediglich über ein Gating-Signal beim Durchstimmen bestimmt werden; das Gating-Signal wird hierbei über ein separaten Referenzlaser erzeugt, der im Bereich dieser beiden Wellenlängen emittiert. Als weiteres Problem kommt hinzu, daß im Fall einer gegebenenfalls gewünschten Anschlußmessung an die absolute Distanzbestimmung kein exakter Wellenlängenwert für die Folgemessung vorliegt.

Es ist daher die Aufgabe der vorliegenden Erfindung, bei einem Verfahren bzw. einer Vorrichtung zur Abstandsmessung der eingangs bezeichneten Art die Meßgenauigkeit zu erhöhen und Störungen der Luftwellenlänge des Lasers, z.B. aufgrund von Temperatur- oder Luftdruckschwankungen innerhalb der jeweiligen Meßstrecken, möglichst weitgehend zu kompensieren und nach einer absouten Abstandsmessung relativmessend mit bekannter Laserwellenlänge weiter verfahren zu können, bis der Strahl oder aber die Messung unterbrochen wird, wonach der absolutmessende Modus neu durchlaufen werden kann.

Diese Aufgabe wird durch ein erfindungsgemäßes Verfahren mit den in Anspruch 1 aufgeführten Verfahrensschritten gelöst.

Gegenüber dem aus dem Stand der Technik bekannten Verfahren zeichnet sich das erfindungsgemäße Meßverfahren demnach dadurch aus, daß in die Ermittlung der Meßstrecke keine absoluten Längenabstände eingehen, sondern lediglich Werte der Wellenlänge bzw. Schwebungswellenlänge sowie der Phasenänderung. Weiterhin bietet das erfindungsgemäße Meßverfahren den Vorteil, daß aufgrund der Wellenlängenregelung an den jeweiligen Endpunkten des Wellenlängenintervalls die im allgemeinen auftretenden Bruchteile der Phasenänderungen des zu messenden Interferenzsignals mit einer Auflösung von besser als 1/100 ermittelt werden können. Durch die Regelung der beiden Wellenlängenwerte mittels eines Regelinterferometers ist zudem gewährleistet, daß während der Phasenmessung etwa auftretende Störungen in der Meßstrecke der oben bezeichneten Art kompensiert werden.

Bei dem erfindungsgemäßen Meßverfahren kann weiter vorgesehen sein, daß eine Regelstrecke mit einer im Zentimeterbereich liegenden Länge verwendet wird.

Bei dem erfindungsgemäßen Meßverfahren kann weiter vorgesehen sein, daß nach einem absolutmessenden Meßzyklus mit einer eingeregelten Wellenlänge relativmessend im Sinne der herkömmlichen Interferometrie weiterverfahren wird.

Bei Verwendung eines Halbleiterlasers bietet sich wegen des dort höheren Leistungsniveaus des Laserstrahls sowie der ausgesprochenen Monomodigkeit besonders die Wellenlänge $\lambda_2$ an. Das erfindungsgemäße Meßverfahren bietet erstmals die Möglichkeit, absolute und relative Abstandsmessungen zu kombinieren, da die Luftwellenlängen bei diesem Verfahren absolut geregelt werden. Dies ist deshalb möglich, da die Wellenlängenwerte bei diesem Verfahren absolut gemessen werden. Eine Kombination von absoluter und relativer Abstandsmessung bietet sich z.B. dann an, wenn zur Steuerung einer automatisierten Fertigungsanlage in der Regel relative Abstandsmessungen ausreichen, jedoch Absolutmessungen, z.B. für Justierungszwecke, zeitweise vonnöten sind oder aber der Strahl unterbrochen wurde oder die Messung in anderer Weise zum Abbruch kam, beispielsweise durch eine zu hohe, durch die elektronische Grenzfrequenz bestimmte Verschiebegeschwindigkeit des Meßreflektors.

Bei dem erfindungsgemäßen Meßverfahren kann ferner vorgesehen sein, daß die Wellenlängenmodulation über den Betriebsstrom des Lasers erfolgt.

Um die Zeit für einen Meßzyklus möglichst gering zu halten und damit Fehlereinflüsse zu minimieren, ist es beim Halbleiterlaser vorteilhaft, die Wellenlängenänderung nur durch eine Strommodulation, nicht aber durch beispielsweise eine Temperaturänderung der Wärmesenke des Lasers, durchzuführen. Zwar ist der kontinuierliche Durchstimmbereich bei einer Temperaturänderung um etwa einen Faktor 5 größer als derjenige bei einer Stromänderung, jedoch benötigt dieser Prozeß mehrere Sekunden im Gegensatz zu wenigen Millisekunden bei einer Strommodulation. Alternativ dazu kann jedoch auch z.B. ein Halbleiterlaser mit externem Resonatorgitter eingesetzt werden, bei dem die Wellenlänge durch Drehen und/oder Verschieben des Resonatorgitters variiert wird. Alternativ dazu kann eine Modulation auch durch eine Kombination von Temperatur, Strom sowie Drehen und/oder Verschieben des Resonanzgitters bewirkt werden.

Bei dem erfindungsgemäßen Meßverfahren kann ferner vorgesehen sein, daß die jeweiligen Restphasen im Bereich der Wellenlängenwerte $\lambda_1$ und $\lambda_2$ ermittelt werden.

Als Restphasen werden die an den Enden des gesamten Wellenlängenintervalls bruchteiligen Phasenwerte bezeichnet.

Bei dem erfindungsgemäßen Meßverfahren kann ferner vorgesehen sein, daß zumindest im Meßinterferometer aus wenigstens zwei interferierenden Teilstrahlen jeweils gegeneinander phasenverschobene Interferenzsignale erzeugt werden, die jeweils mittels eines Photodetektors gemessen werden.

Die Erzeugung von beispielsweise um 90° phasenverschobenen Interferenzsignalen kann bekanntermaßen durch Einbringen eines Lambda/4-Plättchens in den Strahlweg erfolgen. Diese Verfahrensweise bietet einerseits den Vorteil, daß neben absolutinterferometrischen Messungen auch relative Abstandsmessungen durchgeführt werden können, wobei durch Einbringen eines Lambda/4-Plättchens z.B. in die Meßstrecke bekanntlich auch die Richtung der Relativbewegungen des zu vermessenden Objekts ermittelt werden kann.

Zudem bietet diese Verfahrensweise die Möglichkeit einer weiteren Auflösungssteigerung bei der Phasenmessung, was erfindungsgemäß dadurch erreicht werden kann, daß die Ermittlung der integralen Phasenänderung anhand der durch zwei um 90° phasenverschobenen Interferenzsignale gebildeten ellipsenförmigen Lissajous-Figur erfolgt.

Die Auswertung der Lissajous-Ellipse gestattet eine äußerst genaue Ermittlung der Phasen der Interferenzsignale, insbesondere der Restphasen. Um diese Auswertung zweckmäßig durchführen zu können, muß allerdings gewährleistet sein, daß die von den Photodetektoren registrierten Lichtintensitäten der um 90° phasenverschobenen Interferenzsignale in einer zweiachsigen Darstellung auf einer kreisförmigen Lissajous-Kurve zu liegen kommen. In der Regel liegen jedoch die gemessenen Phasenwerte nicht auf einem Kreis, sondern auf einer Ellipse, die aufgrund der Leistungscharakteristika eines Halbleiterlasers bei einer Strommodulation nicht geschlossen ist, sondern sich spiralförmig aufweitet. Für die Ellipsenform sind hauptsächlich eine nicht exakte 90°-Phasenverschiebung, ungleiche Verstärkungsfaktoren der beiden um 90° phasenverschobenen Interferenzsignale sowie das Auftreten eines Offsets verantwortlich. Eine Möglichkeit zur Korrektur der gemessenen Phasenwerte bietet die bekannte Heydemann-Korrektur, die eine Elliptizität der Lissajous-Kurve durch eine Hauptachsentransformation in einen Kreis umwandelt. Hierzu muß allerdings eine vollständige Signalperiode mit möglichst vielen Meßpunkten aufgenommen werden.

Um dies zu erreichen, kann daher nach dem erfindungsgemäßen Meßverfahren ferner vorgesehen sein, daß zur Ermittlung der Restphasen die Wellenlängenregelung an dem Wellenlängenwert $\lambda_1$ bzw. $\lambda_2$ ausgestellt und der Betriebsstrom des Lasers derart variiert wird, daß die Phasenänderung in diesen Bereichen über mindestens eine Wellenperiode ermittelt werden kann und daß die jeweilige Restphase durch Anpassung einer Ellipse an die ellipsenartige Lissajous-Figur an die beiden um 90° phasenverschobenen Interferenzsignale und anschließender Transformation in einen Kreis bestimmt wird.

Bei dem erfindungsgemäßen Meßverfahren kann weiter vorgesehen sein, daß die Interferenzsignale des Meßinterferometers Vorverstärkern zugeführt werden, deren Verstärkungsfaktor sich umgekehrt proportional zur Laserleistung verhält.

Bei dem erfindungsgemäßen Meßverfahren kann weiter vorgesehen sein, daß zusätzlich ein Referenzinterferometer eingesetzt wird, dessen festgelegte Referenzstrecke etwa der halben Meßstrecke entspricht und das im übrigen entsprechend dem Meßinterferometer aufgebaut ist.

Eine Kombination der bekannten Referenzstreckenmethode mit dem erfindungsgemäßen Meßverfahren verknüpft den Vorteil der geringen Meßunsicherheit aufgrund einer langen Referenzstrecke mit dem Vorteil der sehr genauen Kenntnis der Wellenlängen. Denkbar ist beispielsweise eine Meßanordnung, bei der neben dem eigentlichen Absolutinterferometer sowohl ein Interferometer zur Wellenlängenregelung als auch ein Referenzinterferometer Verwendung finden. Eine Referenzstrecke von etwa der halben Meßstrecke hat den Vorteil, daß bei sämtlichen Meßabständen eine optimale Übereinstimmung der Luftverhältnisse in den beiden Interferometern gewährleistet ist. Dazu ist es allerdings zweckmäßig, die beiden Interferometer in möglichst geringem Abstand voneinander aufzubauen.

Der Einsatz eines Referenzinterferometers gestattet die Ermittlung von Vergleichswerten des Meßabstandes, wobei erfindungsgemäß vorgesehen sein kann, daß die aufgrund der Wellenlängenmodulation im Referenzinterferometer und im Meßinterferometer erzeugten Phasenänderungen $\Delta\Phi_{\text{Ref}}$ und $\Delta\Phi_{abs}$ gemessen werden, wobei die Lange $L_{abs}$ der Meßstrecke bei bekannter Länge $L_{\text{Ref}}$ der Referenzstrecke nach der Formel

$$L_{abs} = L_{\text{Ref}} \frac{\Delta\Phi_{abs}}{\Delta\Phi_{\text{Ref}}}$$

bestimmt wird.

Bei dem erfindungsgemäßen Meßverfahren kann ferner vorgesehen sein, daß die Phasenänderungen $\Delta\Phi_{abs}$ und $\Delta\Phi_{\text{Ref}}$ mittels desselben Triggersignals durch Überabtastung bestimmt werden.

Bei der meßtechnischen Erfassung der integralen Phasenänderung wird diese im allgemeinen in Form einer treppenförmigen Digitalisierungskurve meßtechnisch erfaßt. Die Anzahl der Digitalisierungsstufen ist in der Absolutinterferometrie mit heute kommerziellen Halbleiterlasern im allgemeinen äußerst gering und um den Faktor

$$\frac{\lambda_{1.2}}{\lambda_2 - \lambda_1} \cong 4.000$$

geringer als in der herkömmlichen Interferometrie. Eine Erhöhung der Phasenauflösung kann bei einer digitalen Datenerfassung durch eine Überabtastung ("oversampling") der Meßelektronik mit einer konstanten Abtastrate erreicht werden. Die Auflösungserhöhung ist dabei proportional zum Verhältnis der Stufenlänge zur Länge eines Abtastintervalls. Die Wellenlängenendbereiche, innerhalb derer die Überabtastung erfolgt, entsprechen maximal 1/2 des gesamten Wellenlängenintervalls.

Bei dem erfindungsgemäßen Meßverfahren kann schließlich vorgesehen sein, daß ein zweiter Laser oder ein Mehrwellenlängenlaser verwendet wird, der zusätzlich einen Laserstrahl mit mindestens einer weiteren diskreten Wellenlänge $\lambda_3$ emittiert, der ebenfalls in die jeweiligen Interferometer eingekoppelt wird, wobei die Laserwellenlängen nacheinander im Wechsel betrieben werden und wobei der Wellenlängenwert $\lambda_3$ so auf die Wellenlängenwerte $\lambda_1$ und $\lambda_2$ abgestimmt wird, daß durch eine nachträglich mittels einer Elektronik oder eines Rechners durchgeführte Überlagerung der beiden Laserstrahlen eine synthetische Schwebung mit einer bestimmten Schwebungswellenlänge gebildet wird.

Durch diese Maßnahmen kann die Längenauflösung bei dem erfindungsgemäßen Meßverfahren weiter erhöht werden. Aufgrund der zusätzlichen diskreten Wellenlänge kann eine Schwebungswellenlänge erzeugt werden, die größer als die Meßunsicherheit aufgrund der Methode der kontinuierlichen Durchstimmung der Wellenlänge ist. Es ist auch eine Überlagerung von $\lambda_1$ und $\lambda_3$ möglich, da die zu $\lambda_1$ gehörige Restphase bereits gemessen wurde. Hierdurch ergibt sich eine Fehlerkontrolle, denn sowohl $\lambda_1$ und $\lambda_3$ als auch $\lambda_2$ und $\lambda_3$ müssen ein übereinstimmendes Ergebnis liefern.

Als Laserquelle kommen z.B. ein Halbleiter- oder ein Festkörperlaser in Betracht. Das Regelinterferometer gleicht in seinem Aufbau dem Meßinterferometer, außer den Merkmalen, daß die Interferometerarme eine konstante Längendifferenz zueinander aufweisen, d.h. insbesondere die Länge der Regelstrecke fest vorgegeben ist, und daß die Regelstrecke kürzer als die halbe Länge der Meßstrecke ausgebildet ist. Eine kurze Regelstrecke hat dabei den Vorteil, daß das Regelinterferometer im Falle von Störungen, z.B. Temperatur- oder Luftdruckschwankungen in der Meß- bzw. Regelstrecke, nicht in eine andere Ordnung überspringt. Dies geht allerdings auf Kosten der mit dem Regelinterferometer erreichbaren Auflösung, wobei allerdings bei der erfindungsgemäßen Interferometeranordnung die damit erreichbare Genauigkeit ausreicht.

Bei der Verwendung einer Interferometer-Kaskade werden Regelinterferometer mit unterschiedlichen Regelstrecken eingesetzt. Ein erstes Interferometer mit kurzer Regelstrecke erlaubt beim Einschalten ein Einlocken der Regelung auf eine vorbestimmte Wellenlänge. Dabei wird die Wellenlänge durch dieses Interferometer so genau stabilisiert, daß beim anschließenden Umschalten auf eine lange Regelstrecke auf die richtige Wellenlänge eingerastet wird. Mit der langen Regelstrecke ist dann eine bessere Stabilisierung erreichbar.

Bei der Laserinterferometeranordnung kann weiter vorgesehen sein, daß die Länge der Regelstrecke im Zentimeterbereich liegt.

Bei der Laserinterferometeranordnung kann weiter vorgesehen sein, daß für die Interferenzsignale des Meßinterferometers Vorverstärker vorgesehen sind, deren Verstärkungsfaktor sich umgekehrt proportional zur Laserleistung verhält. Dies führt dazu, daß nach den Vorverstärkern die Signalpegel unabhängig von der Laserleistung und damit von der Wellenlänge sind.

Bei der Laserinterferometeranordnung kann weiter vorgesehen sein, daß im Strahlweg der Regelstrecke des Regelinterferometers ein Lambda/4-Plättchen vorgesehen ist.

Diese Maßnahme ermöglicht auch während der kontinuierlichen Wellenlängenänderung ein Mitzählen der Ordnungen mittels des Regelinterferometers.

Die Laserinterferometeranordnung kann ferner so ausgebildet sein, daß zusätzlich ein Referenzinterferometer vorgesehen ist, dessen Interferometerarme eine konstante Längendifferenz zueinander aufweisen und dessen Referenzstrecke etwa der halben Meßstrecke entspricht.

Die Kombination eines Meßinterferometers mit einem Referenzinterferometer verknüpft den Vorteil der geringen Meßunsicherheit aufgrund einer langen Referenzstrecke mit dem Vorteil der sehr genauen Kenntnis der Wellenlänge.

Die Laserinterferometeranordnung kann ferner so ausgebildet sein, daß ein zweiter Laser oder ein Mehrwellenlängenlaser vorgesehen ist, der einen Laserstrahl mit mindestens einer weiteren diskreten Wellenlänge emittiert, die ungleich den Wellenlängenwerten $\lambda_1$ und $\lambda_2$ ist.

Durch eine nachträgliche Überlagerung der nunmehr auftretenden Laserstrahlwellenlängen kann insgesamt eine Schwebungswellenlänge erzeugt werden, die größer als die Meßunsicherheit aufgrund der Methode der kontinuierlichen Durchstimmung der Wellenlänge ist. Hierdurch kann das Auflösungsvermögen der Laserinterferometeranordnung weiter erhöht werden.

Die Laserinterferometeranordnung kann ferner so ausgebildet sein, daß zur Automatisierung der Phasenauswertung ein Zähler bzw. eine Zählelektronik sowie eine Auswerteelektronik oder ein Rechner vorgesehen sind.

Hierdurch lassen sich sämtliche Schritte bei dem Meßverfahren automatisieren und daher sukzessive aufeinanderfolgende Abstandsmessungen durchführen.

Bei der Laserinterferometeranordnung kann schließlich vorgesehen sein, daß wenigstens ein Teil der Anordnung als integrierte Optik und Teile des Lichtweges als Lichtwellenleiter ausgebildet sind.

Die Miniaturisierung wird erst durch die ausschließliche Verwendung von in der integrierten Optik üblich verwendeten Standardbauteilen möglich und erschließt der erfindungsgemäßen Laserinterferometeranordnung einen noch umfassenderen Anwendungsbereich. Dabei können zwischen einzelnen Bauteilen auftretende Kopplungen über Lichtwellenleiter erfolgen.

Im folgenden Teil wird das erfindungsgemäße Verfahren anhand eines Ausführungsbeispieles einer geeigneten Laserinterferometeranordnung näher erläutert.

Im einzelnen zeigen:

Fig. 1 ein Ausführungsbeispiel einer geeigneten Laserinterferometeranordnung mit zwei Lasern;

Fig. 2 ein Beispiel für eine dem Meßverfahren entsprechende Wellenlängenänderung sowie einen daraus resultierenden Phasenverlauf des im Meßinterferometer auftretenden Interferenzsignals;

Fig. 3 eine schematische Darstellung der Phasenauflösung durch Überabtastung;

Fig. 4 eine Darstellung der Lissajous-Ellipse zweier um 90° phasenverschobener Interferenzsignale und

Fig. 5 einen Signalverlauf zur Phasenbestimmung entsprechend der Methode der Variation der Laserwellenlänge im Bereich der Restphasen.

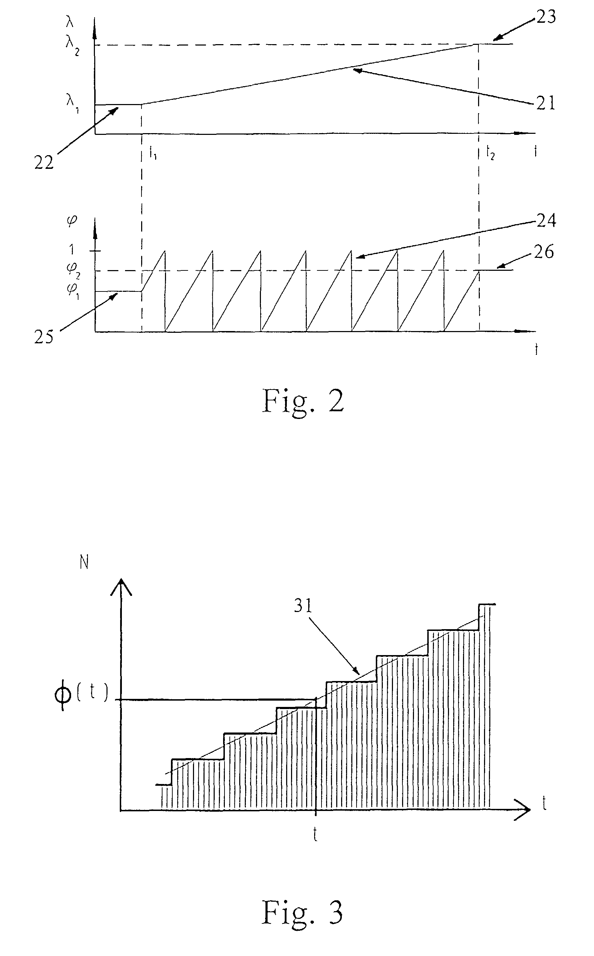

Die in Fig. 1 dargestellte absolutmessende Laserinterferometeranordnung 1 weist zwei durchstimmbare Laser 2,3 auf, wobei der Laser 2 mittels einer nicht dargestellten Betriebsstromversorgung in einem modensprungfreien Wellenlängenbereich seiner Kennlinie moduliert, dagegen der Laser 3 auf einer festen Wellenlänge betrieben wird. Weiter ist ein Meßinterferometer 4 vorgesehen, bei dem ein Interferometerarm 5 die eigentliche Meßstrecke bildet Zur Erzeugung von mindestens zwei miteinander interferierenden Teilstrahlen 6,7 sind ein Strahlteiler 8 sowie zwei Retroreflektoren 9,10 vorgesehen. Die Erfassung der interferierenden Teilstrahlen 6,7 erfolgt mittels Photodetektoren 11,12. Ferner sind die Photodetektoren 11,12 an eine hier nicht dargestellte Zählelektronik angeschlossen und die Laser 2,3 jeweils an eine ebenfalls nicht dargestellte Regeleinrichtung für die Laserwellenlänge. In unmittelbarer Nähe zum Meßinterferometer 4 ist zusätzlich ein Regelinterferometer 13 vorgesehen, dessen Regelstrecke 14 eine konstante Länge aufweist, die kürzer als die halbe Länge der Meßstrecke ist. Ansonsten stimmt das Regelinterferometer 13 in seinem Aufbau mit dem Meßinterferometer 4 überein. Das Meßinterferometer 4 und das Regelinterferometer 13 werden mittels eines Primärstrahlteilers 15 sowie eines Reflektors 16 mit dem Strahl desselben Lasers 2,3 beaufschlagt. Die Einkopplung des Strahls des Lasers 2 erfolgt über einen Reflektor 17. Aufgrund der ausschließlichen Verwendung von Standardbauteilen läßt sich die gesamte Laserinterferometeranordnung 1 als integrierte Optik aufbauen.

Die Bestimmung des Absolutabstandes $L_{abs}$ kann dabei beispielsweise in der Art und Weise erfolgen, daß z.B. mit den gemessenen Restphasen $\varphi_2$ und $\varphi_3$ in einem Intervall um den mit der Methode der kontinuierlichen Durchstimmbarkeit bestimmten Abstand derjenige Abstand ermittelt wird, für den die Gleichung :

$$L_{abs} = (m_2 + \varphi_2) \cdot \frac{\lambda_2}{2} = (m_3 + \varphi_3) \cdot \frac{\lambda_3}{2}$$

am besten erfüllt ist, wobei das Intervall größer als die doppelte Meßunsicherheit mit dieser Methode und kleiner als die halbe synthetische Wellenlänge sein muß. Dies kann in der Art und Weise geschehen, daß in dem Intervall beispielsweise diejenigen Abstände ermittelt werden, die aufgrund von $\varphi_2$ und $\lambda_2$ sowie $\varphi_3$ und $\lambda_3$ möglich sind und der Größe nach sortiert werden und derjenige Abstand gesucht wird, bei dem die Differenz zweier aufeinanderfolgender Abstände minimal ist. Hierdurch ergibt sich die ganzzahlige Interferenzordnungszahl $m_2$ bzw. $m_3$. Eine Bestimmung des Absolutabstandes mit den gemessenen Restphasen $\varphi_1$ und $\varphi_3$

kann hier als eine Überprüfung dienen. Aufgrund der sehr genauen Phasenmessung ist es hierdurch möglich, Abstände absolut auf einen Bruchteil der Einzelwellenlänge zu bestimmen, also bei einer Phasenauflösung von 1/100 auf $\frac{\lambda_2}{100}$. Dieses Verfahren setzt bei einer Meßstrecke im Meterbereich eine Wellenlängenregelung voraus, die besser als $10^{-7}$ ist, was mit "freilaufenden" Halbleiterlasern (also nur Strom- und Temperaturregelung) nicht möglich ist, denn ansonsten macht eine Phasenauflösung von 1/100 keinen Sinn.

Die im oberen Teil der Fig. 2 dargestellte Wellenlängenkurve 21 weist zum Zeitpunkt $t_1$ des Beginns einer Messung den konstanten Wellenlängenwert $\lambda_1$ 22 auf. Bis zu diesem Zeitpunkt erfolgt die Regelung auf diesen Wellenlängenwert mittels des Regelinterferometers 13. Dieser Wellenlängenwert wird so gewählt, daß sich zu höheren Werten hin ein größerer modensprungfreier Bereich des Lasers anschließt. Zum Zeitpunkt $t_1$ wird das Regelinterferometer vorübergehend abgeschaltet und die Laserwellenlänge entsprechend dem Verlauf der Kurve 21 durch kontinuierliche Änderung des Laser-Betriebsstromes moduliert. Bei einer innerhalb des modensprungfreien Bereichs liegenden Wellenlänge $\lambda_2$ 23 wird dann das Regelinterferometer 13 wieder eingeschaltet und auf diesen Wellenlängenwert geregelt. Die während der Wellenlängenmodulation auftretende Phasenänderung 24 ist im unteren Bildteil der Fig. 2 dargestellt. Das Sägezahnprofil dieser Kurve 24 ergibt sich daraus, daß beim Durchstimmen der Wellenlänge die Phase sich immer solange linear ändert, bis in eine neue Interferenzordnung übergesprungen wird. Die an den jeweiligen Meßbereichenden vorliegenden konstanten Phasenwerte 25,26 sind aufgrund der Regelung der Wellenlänge mittels des Regelinterferometers sehr genau bestimmbar. Auf die genaue Ermittlung der jeweiligen Restphase, die sich insgesamt in dem Unterschied der Anfangsphase $\varphi_1$ und der Endphase $\varphi_2$ ausdrückt, wird nachfolgend eingegangen. Die integrale Phasenänderung $\Delta\phi$ ergibt sich dabei durch einfaches Abzählen der Sägezahnpeaks und Hinzurechnung der an den Endpunkten der Meßkurve 24 ermittelten Restphasen. Die Bestimmung der Meßstrecke erfolgt schließlich aus der gesamten (integralen) Phasenänderung des Interferenzsignals und den Wellenlängenwerten $\lambda_1$ sowie $\lambda_2$ nach der in Anspruch 1 genannten Formel oder aber durch eine vorherige Kalibrierung, die beispielsweise durch eine Messung an zwei unterschiedlichen, möglichst weit voneinander entfernten Positionen geschehen kann, bei gleichzeitiger Messung des Abstandes zwischen diesen Positionen mit einem anderen geeigneten Verfahren, so daß hieraus eine Verhältniszahl $k = \Delta L/\Delta\Phi$ folgt, mit der absolute Abstände durch $L_{abs} = k\cdot\Delta\Phi$ bestimmt werden können. Es wird hervorgehoben, daß aufgrund der genauen Kenntnis der Wellenlänge $\lambda_2$ sich an eine Absolutmessung eine Relativmessung anschließen kann.

Fig. 3 zeigt eine schematische Darstellung der Phasenauflösung durch Überabtastung, wie sie bei Verwendung eines zusätzlichen Referenzinterferometers geschehen kann. Diese Überabtastung wird hier nur zu Beginn und zum Ende eines Meßzyklusses durchgeführt. Dargestellt ist hier eine Digitalisierungskurve 31, die beispielsweise am Anfang der Wellenlängenmodulation aufgenommen wurde. Aufgrund der gleichzeitigen Meßwertaufnahme im Meß- und Referenzinterferometer zu Beginn und zum Ende der Wellenlängenmodulation (jeweils etwa 10.000 Meßwerte), lassen sich dementsprechend viele, korrespondierende, ganzzahlige Phasendifferenzen $N_{abs}$ sowie $N_{Ref}$ bilden, aus denen der Absolutabstand nach:

$$L_{abs} = L_{Ref}\,\frac{N_{abs}}{N_{Ref}}$$

berechnet werden kann. Eine erhöhte Auflösung wird in diesem Fall dadurch erreicht, daß 10.000 Differenzen $N_{abs}$ sowie $N_{Ref}$ pro Meßzyklus zur Verfügung stehen, über die anschließend gemittelt werden kann.

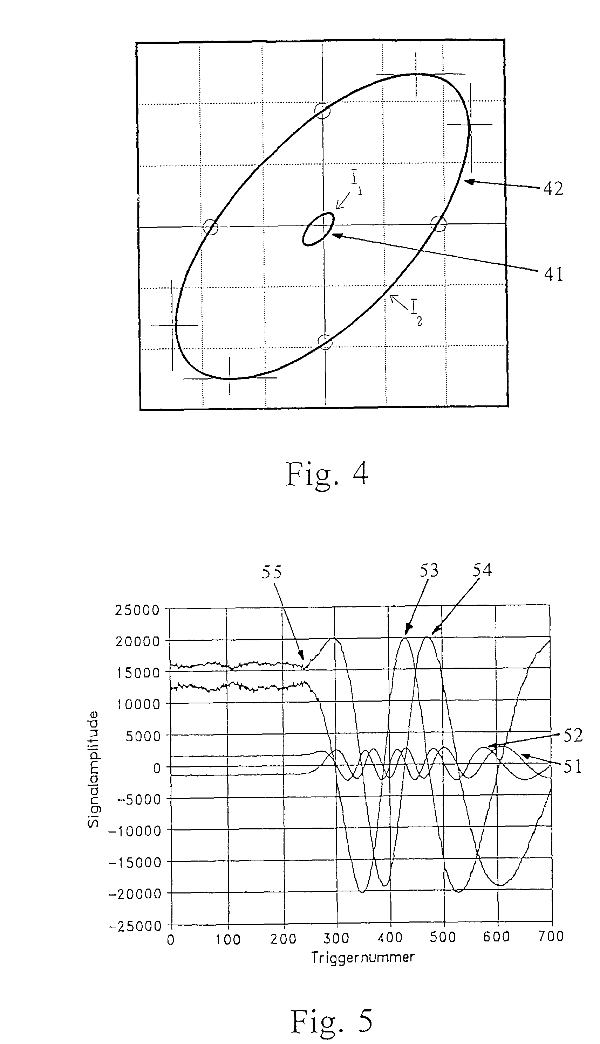

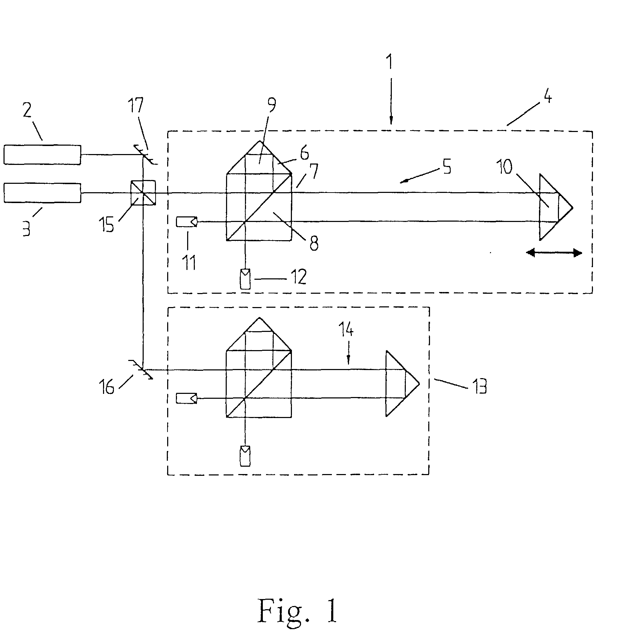

Fig. 4 zeigt eine typische Lissajous-Ellipse, die durch analytische Anpassung an zwei um 90° phasenverschobene und mittels der Photodetektoren 11,12 erfaßte Interferenzsignale 6,7 ermittelt worden ist. Die innere Lissajous-Kurve 41 stellt den Phasenverlauf der beiden Interferenzsignale einer Wellenperiode zu Beginn eines Meßzyklusses dar, die äußere Kurve 42 dagegen den Phasenverlauf am Ende eines Meßzyklusses. Die unterschiedlichen Radien sind eine Folge der mit der Wellenlänge ansteigenden Leistungscharakteristik des Lasers. Die Restphasen $\varphi_1$ bzw. $\varphi_2$ liegen jeweils auf einer dieser Kurven und lassen sich daraus äußerst genau bestimmen. Es wird allerdings in der Regel dabei zweckmäßig sein, die Ellipse nach bekannten Verfahren zuvor in einen Kreis zu transformieren.

Schließlich zeigt Fig. 5 einen Signalverlauf zur Phasenbestimmung entsprechend der Methode der Variation der Laserwellenlänge im Bereich der Wellenlängenendwerte. Hierbei werden zusätzlich zu den dort statisch ermittelten Phasenwerten die Phasen einer vollständigen Periode aufgenommen. Das Diagramm in Fig. 5 zeigt dies für zu Beginn eines Meßzyklusses aufgenommene Phasendaten 51,52 der um 90° phasenverschobenen Interferenzsignale sowie entsprechend am Ende gemessene Daten 53,54. Zur Aufnahme dieser Kurven 51,52,53,54 wird die mittels des Regelinterferometers 13 erfolgende Wellenlängenregelung zum Zeitpunkt 55 kurz ausgeschaltet und durch eine Variation des Betriebsstromes des Lasers eine Phasenänderung über mindestens eine Periode hervorgerufen. An die in dieser Weise ermittelten Daten wird eine Lissajous-Ellipse angepaßt, die dann entsprechend dem Verfahren nach Fig. 4 ausgewertet werden kann.

Abweichend von Fig. 1 kann zur besonders zuverlässigen Auswertung auch die bekannte Methode mit paarweise in Differenz geschalteten Signalen angewandt werden, also die sogenannte Gegentakt-Auswertung mit vier zueinander phasenverschobenen Signalen. Eine weitere vorteilhaft Auswertung kann auch derart sein, daß drei um etwa 120° zueinander phasenversetzte Interferenzsignale erzeugt werden.

**Patentansprüche**

1. Verfahren zur absolut-interferometrischen Abstandsmessung mit

   - einem wenigstens in einem Wellenlängenbereich modensprungfrei durchstimmbaren Laser (2),
   - einem Meßinterferometer (4), welches mit einem Laserstrahl beaufschlagt wird und mindestens einen Interferometerarm (5) aufweist, der als variable Meßstrecke ausgelegt ist sowie
   - ein Regelinterferometer (13) oder eine aus mindestens zwei Regelinterferometern gebildete Interferometer-Kaskade mit einer festen Regelstrecke (14), welches zur Erzeugung von Interferenzsignalen als Regelgrößen für die Einstellung einer oder mehrerer definierten Wellenlängen $\lambda_1$, $\lambda_2$ des Lasers (2) dient,

   wobei besagtes Verfahren folgende Schritte aufweist:

   a) Regelung der Laserwellenlänge auf einen konstanten ersten Wellenlängenwert $\lambda_1$ mit Hilfe des Regelinterferometers (13), wobei sich an den ersten Wellenlängenwert $\lambda_1$ ein modensprungfreier Durchstimm-Bereich des Lasers (2) anschließt,
   b) Abschalten des Regelinterferometers (13),
   c) kontinuierliches Durchstimmen der Laserwellenlänge bis zu einem zweiten Wellenlängenwert $\lambda_2$ innerhalb des modensprungfreien Durchstimm-Bereiches, wobei gleichzeitig im Meßinterferometer (4) und im Regelinterferometer (13) jeweils mindestens ein Interferenzsignal gebildet wird,
   d) Wieder-Einschalten des Regelinterferometers (13) und Einregelung der Laser-Wellenlänge auf den zweiten Wellenlängenwert $\lambda_2$,
   e) wobei während der Durchstimmens der Laserwellenlänge die (jeweilige) integrale Phasenänderung $\Delta\phi$ des (der) Interferenzsignal(s)e des Meßinterferometers (4) kontinuierlich detektiert und die Länge $L_{abs}$ der Meßstrecke nach der Formel

   $$L_{abs} = \Delta\phi/2 \cdot (\lambda_1 \cdot \lambda_2 /(\lambda_2 - \lambda_1))$$

   bestimmt wird.

2. Verfahren nach Anspruch 1, wobei nach einem absolutmessenden Meßzyklus mit einer eingeregelten Wellenlänge $\lambda_2$ relativmessend im Sinne der herkömmlichen Interferometrie weiterverfahren wird.

3. Verfahren nach einem der vorhergehenden Ansprüche, wobei die Wellenlängenmodulation über den Betriebsstrom des Lasers erfolgt.

4. Verfahren nach einem der vorhergehenden Ansprüche, wobei die jeweiligen Restphasen $\phi_1$, $\phi_2$ im Bereich der Wellenlängenwerte $\lambda_1$ und $\lambda_2$ ermitfelt werden.

5. Verfahren nach einem der vorhergehenden Ansprüche, wobei zumindest im Meßinterferometer (4) aus wenigstens zwei interferierenden Teilstrahlen jeweils gegeneinander phasenverschobene Interferenzsignale erzeugt werden, die jeweils mittels eines Photodetektors (11, 12) gemessen werden.

6. Verfahren nach Anspruch 5, wobei die Ermittlung der integralen Phasenänderung $\Delta\phi$ anhand der von zwei um 90° phasenverschobenen Interferenzsignalen gebildeten ellipsenförmigen Lissajous-Figur (41, 42) erfolgt

7. Verfahren nach Anspruch 5 oder 6, wobei zur Ermittlung der Restphasen ($\phi_1$, $\phi_2$) die Wellenlängenregelung an dem Wellenlängenwert $\lambda_1$ bzw. $\lambda_2$ ausgestellt und der Betriebsstrom des Lasers (2) derart variiert wird, daß die Phasenänderung in diesen Bereichen über mindestens eine Wellenperiode ermittelt werden kann und daß die jeweilige Restphase $\phi_1$, $\phi_2$ durch Anpassung einer Ellipse an die ellipsenartige Lissajous-Figur (41, 42) an die beiden um 90° phasenverschobenen Interferenzsignale und anschließender Transformation in einem Kreis bestimmt wird.

8. Verfahren nach einem der vorhergehenden Ansprüche, wobei zusätzlich ein Referenzinterferometer eingesetzt wird, dessen festgelegte Referenzstrecke etwa der halben Meßstrecke entspricht und das im übrigen entsprechend dem Meßinterferometer aufgebaut ist.

9. Verfahren nach Anspruch 8, wobei die aufgrund der Wellenlängenmodulation im Referenzinterferometer und im Meßinterferometer erzeugten Phasenänderungen $\Delta\Phi_{Ref}$ und $\Delta\Phi_{abs}$ gemessen werden, wobei die Länge $L_{abs}$ der Meßstrecke bei bekannter Länge $L_{Ref}$ der Referenzstrecke nach der Formel

$$L_{abs} = L_{Ref} \frac{\Delta\Phi_{abs}}{\Delta\Phi_{Ref}}$$

bestimmt wird.

10. Verfahren nach Anspruch 9, wobei die Phasenänderungen $\Delta\Phi_{abs}$ und $\Delta\Phi_{Ref}$ mittels desselben Triggersignals durch Überabtastung bestimmt werden.

11. Verfahren nach einem der vorhergehenden Ansprüche, wobei ein zweiter Laser (3) oder ein Mehrwellenlängenlaser verwendet wird, der zusätzlich einen Laserstrahl mit mindestens einer weiteren diskreten Wellenlänge $\lambda_3$ emittiert, der ebenfalls in die jeweiligen Interferometer (4, 13) eingekoppelt wird, wobei die Laserwellenlängen nacheinander im Wechsel betrieben werden und wobei der Wellenlängenwert $\lambda_3$ so auf die Wellenlängenwerte $\lambda_1$ und $\lambda_2$ abgestimmt wird, daß durch eine nachträglich mittels einer Elektronik oder eines Rechners durchgeführte Überlagerung der beiden Laserstrahlen eine synthetische Schwebung mit einer bestimmten Schwebungswellenlänge gebildet wird.

**Claims**

1. A method of absolute interferometric distance measurement with

    - a laser (2) which can be tuned at least in one wavelength region without a mode jump,
    - a measuring interferometer (4) which is responsive to a laser beam and has at least one interferometer arm (5) which is designed as a variable measuring path,
    - and a regulating interferometer (13) or an interferometer cascade formed from at least two interferometers, with a fixed regulating path (14) which serves to generate interference signals as regulating values for adjusting one or more defined wavelengths $\lambda_1$, $\lambda_2$ of the laser (2),

    wherein the said method comprises the following steps:

    a) regulating the laser wavelength to a constant first wavelength value $\lambda_1$ with the aid of the regulating interferometer (13), where a tuning range of the laser (2) without a mode jump adjoins the first wavelength value $\lambda_1$,
    b) disabling the regulating interferometer (13),
    c) continuously tuning the laser wavelength up to a second wavelength value $\lambda_2$ within the range free from mode jumps, while at least one interference signal is formed simultaneously in the measuring interferometer (4) and in the regulating interferometer (13),
    d) enabling the regulating interferometer (13) again and adjusting the laser wavelength to the second wavelength value $\lambda_2$

    e) wherein during the tuning of the laser wavelength the (respective) integral phase change $\Delta\phi$ of the interference signal(s) of the measuring interferometer (4) is continuously detected and the length $L_{abs}$ of the measuring path is determined according to the formula:

    $$L_{abs} = \Delta\phi/2\cdot(\lambda_1\cdot\lambda_2/(\lambda_2-\lambda_1)).$$

2. A method according to claim 1, wherein, following an absolute measuring operation continues with an adjusted wavelength $\lambda_2$ with relative measurement in the sense of conventional interferometry.

3. A method according to any of the preceding claims, wherein the wavelength modulation is effected through the operating current of the laser.

4. A method according to any of the preceding claims, wherein the respective residual phases $\phi_1$, $\phi_2$ in the region of the wavelength values $\lambda_1$ and $\lambda_2$ are determined.

5. A method according to any of the preceding claims, wherein mutually phase-displaced interference signals are created at least in the measuring interferometer (4) from at least two interfering component beams, each interference signal being measuring by means of a photodetector (11, 12).

6. A method according to claim 5, wherein the determination of the integral phase change $\Delta\phi$ is effected on the basis of the ellipsoidal Lissajous figure (41, 42) formed from two interference signals phase displaced by 90°.

7. A method according to claim 5 or 6, wherein, in order to determine the residual phases ($\phi_1$, $\phi_2$), the wavelength regulation is set at the wavelength value $\lambda_1$ or $\lambda_2$ and the operating current of the laser (2) is so varied that the phase change can be determined in this range over at least one wavelength penod and that the respective residual phase $\phi_1$, $\phi_2$ is determined by matching an ellipse to the ellipsoidal Lissajous figure (41, 42) at the two interference signals phase displaced by 90° and following transformation into a circle.

8. A method according to any of the preceding claims, wherein a reference interferometer is additionally used with its fixed reference path corresponding to about half the measunng path and which is othenvise built in accordance with the measuring interferometer.

9. A method according to claim 8, wherein the phase

changes $\Delta\phi_{Ref}$ and $\Delta\phi_{abs}$ generated by the wavelength modulation in the reference interferometer and in the measuring interferometer are measured, where the length $L_{abs}$ of the measunng path is determined, knowing the length $L_{Ref}$ of the reference path, according to the formula

$$L_{abs} = L_{Ref} \frac{\Delta\phi_{abs}}{\Delta\phi_{Ref}}$$

10. A method according to claim 9, wherein the phase changes $\Delta\phi_{abs}$ and $\Delta\phi_{Ref}$ are determined by means of the same trigger signal by over-sampling.

11. A method according to any of the preceding claims, wherein a second laser (3) or a multiple wavelength laser is used which additionally emits a laser beam with at least one further discrete wavelength $\lambda_3$, which is likewise coupled into the rcspective interferometers (4, 13), wherein the laser wavelengths are used alternately one after the other and wherein the laser wavelength value $\lambda_3$ is so tuned relative to the wavelength values $\lambda_1$ and $\lambda_2$ that a synthetic beat with a specific beat wavelength is formed through a following superimposition of the two laser beams electronically or by means of a computer.

## Revendications

1. Procédé interférométrique pour la mesure absolue de distances comportant

   - un laser (2) accordable sans changement de mode à l'intérieur d'au moins une plage de longueur d'onde,
   - un interféromètre de mesure (4) qui reçoit un rayon laser et comporte au moins un bras d'interféromètre (5) agencé en trajet de mesure variable ainsi qu'un
   - interféromètre de réglage (13) ou une cascade d'interféromètres formée d'au moins deux interféromètres de réglage, avec un trajet de mesure fixe (14) qui sert à produire des signaux d'interférence comme grandeurs de réglantes pour le réglage d'une ou de plusieurs longueurs d'ondes $\lambda_1$, $\lambda_2$ définies du laser,

   ledit procédé comportant les étapes suivantes:

   a) réglage de la longueur d'onde du laser sur une première valeur de longueur d'onde $\lambda_1$ constante à l'aide de l'interféromètre de réglage (13), une plage de variation du laser (2), sans changement de mode, venant à la suite de la première valeur de longueur d'onde,
   b) coupure de l'interféromètre de réglage (13),

c) variation continue de la longueur d'onde laser jusqu'à une deuxième valeur de longueur d'onde $\lambda_2$ à l'intérieur de la plage de variation sans changement de mode, au moins un signal d'interférence étant produit simultanément dans respectivement l'interféromètre de mesure (4) et l'interféromètre de réglage (13),
   d) remise en service de l'interféromètre de réglage (13) et réglage de la longueur d'onde laser sur la deuxième valeur de longueur d'onde $\lambda_2$,
   e) la variation de phase $\Delta\phi$ intégrale du (des) signal (signaux) d'interférence de l'interféromètre de mesure (4) étant détectée en continu pendant la variation de la longueur d'onde laser et la longueur $L_{abs}$ du trajet de mesure étant déterminée selon la formule
   $L_{abs} = \Delta\phi/2 * (\lambda_1 * \lambda_2 / (\lambda_2 - \lambda_1))$.

2. Procédé selon la revendication 1, selon lequel après un cycle de mesure absolue avec une longueur d'onde $\lambda_2$ réglée, on travaille ensuite par mesure relative dans le sens de l'interférométrie courante.

3. Procédé selon une des revendications précédentes, selon lequel la modulation de la longueur d'onde est réalisée par le biais du courant de service du laser.

4. Procédé selon une des revendications précédentes, selon lequel on détermine les phases résiduelles $\phi_1$, $\phi_2$ respectives dans la plage des valeurs de longueur d'onde $\lambda_1$ et $\lambda_2$.

5. Procédé selon une des revendications précédentes, selon lequel on produit au moins dans l'interféromètre de mesure (4), à partir d'au moins deux rayons partiels en interférence des signaux d'interférence mutuellement déphasés que l'on mesure à l'aide d'un détecteur photo-électrique (11, 12).

6. Procédé selon la revendication 5, selon lequel on détermine la variation de phase $\Delta\phi$ intégrale à l'aide de la courbe de Lissajous (41, 42) en forme d'ellipse formée par deux signaux d'interférence mutuellement décalés de 90°.

7. Procédé selon la revendication 5 ou 6, selon lequel pour déterminer les phases résiduelles ($\phi_1$, $\phi_2$) on sélectionne le réglage de la longueur d'onde pour la valeur de longueur d'onde $\lambda_1$ ou $\lambda_2$ et on fait varier le courant de service du laser (2) de telle sorte que la variation de phase dans ces plages puisse être déterminée sur au moins une période et en ce qu'on détermine la phase résiduelle ($\phi_1$, $\phi_2$) correspondante par adaptation d'une ellipse à la courbe de Lissajous elliptique (41, 42), aux deux signaux d'interférence déphasés de 90°, et transformation consécutive en un cercle.

8.  Procédé selon une des revendications précédentes, selon lequel on utilise en outre un interféromètre de référence dont le trajet de référence déterminé correspond sensiblement à la moitié du trajet de mesure et qui pour le reste est construit de la même manière que l'interféromètre de mesure.

9.  Procédé selon la revendication 8, selon lequel on mesure les variations de phase $\Delta\phi_{Ref}$ et $\Delta\phi_{abs}$ produites dans l'interféromètre de référence et dans l'interféromètre de mesure par la modulation de la longueur d'onde, la longueur $L_{abs}$ du trajet de mesure pour une longueur $L_{Ref}$ connue du trajet de référence étant déterminée selon la formule:

$$L_{abs} = L_{Ref} \frac{\Delta\phi_{abs}}{\Delta\phi_{Ref}}$$

10. Procédé selon la revendication 9, selon lequel on détermine les variations de phase $\Delta\phi_{abs}$ et $\Delta\phi_{Ref}$ à l'aide du même signal de déclenchement par suréchantillonnnage.

11. Procédé selon une des revendications précédentes selon lequel on utilise un second laser (3) ou un laser à plusieurs longueurs d'ondes qui émet en plus un rayon laser avec au moins une longueur d'onde supplémentaire discrète ($\lambda_3$) qui est lui aussi couplé dans l'interféromètre (4, 13) concerné, les longueurs d'onde laser étant activées successivement en alternance et la valeur de longueur d'onde $\lambda_3$ étant accordée avec les valeurs de longueur d'onde $\lambda_1$ et $\lambda_2$ de telle sorte que par une superposition consécutive des deux rayons laser, opérée à l'aide d'une électronique ou d'un calculateur, on obtienne un battement synthétique avec une longueur d'onde de battement déterminée.

Fig. 2

Fig. 3

Fig. 4

Fig. 5

Fig. 1